Europäisches Patentamt

European Patent Office

Office européen des brevets

(19)

(11) Veröffentlichungsnummer: **0 036 219**
**B1**

(12) **EUROPÄISCHE PATENTSCHRIFT**

(45) Veröffentlichungstag der Patentschrift:
22.02.84

(21) Anmeldenummer: 81102073.4

(22) Anmeldetag: 19.03.81

(51) Int. Cl.³: **B 65 G 53/66,** B 65 G 53/60

(54) Mühlenpneumatik.

(30) Priorität: 19.03.80 CH 2146/80
30.06.80 DE 3024743

(43) Veröffentlichungstag der Anmeldung:
23.09.81 Patentblatt 81/38

(45) Bekanntmachung des Hinweises auf die Patenterteilung:
22.02.84 Patentblatt 84/8

(84) Benannte Vertragsstaaten:
AT BE CH FR GB IT LI NL SE

(56) Entgegenhaltungen:
CH - A - 290 764
DE - C - 811 578
DE - C - 1 556 111
US - A - 2 826 459

(73) Patentinhaber: Gebrüder Bühler AG, CH-9240 Uzwil (CH)

(72) Erfinder: Oetiker, Hans, Sahlistrasse 4, CH-9000 Sankt Gallen (CH)

(74) Vertreter: Geyer, Werner, Dr.-Ing. et al, Patentanwälte GEYER, HAGEMANN & PARTNER
Postfach 860329 Ismaninger Strasse 108,
D-8000 München 86 (DE)

BUNDESDRUCKEREI BERLIN

## Mühlenpneumatik

Die Erfindung bezieht sich auf eine Mühlenpneumatik mit einer Förderleitung, einer Regeleinrichtung, einem als Zyklon ausgebildeten Abscheider sowie einer diesem zugeordneten Druckdifferenz-Meßeinrichtung, von der aus eine in der Abluftleitung des Zyklons angeordnete Luftdrossel steuerbar ist, und mit einer ersten Druckmeßstelle an der Förderleitung vor deren Eintritt in den Zyklon und einer zweiten Druckmeßstelle hinter dem Abscheider.

Für die Passagenüberhebung der Mühlenzwischenprodukte hat die Mühlenpneumatik in den vergangenen drei Jahrzehnten die früher verwendeten Elevatoren nahezu vollständig verdrängt. Nur mittels Mühlenpneumatik läßt sich eine große Anzahl Einzelförderungen besonders platzsparend und sich den räumlichen Verhältnissen anpassend installieren. Ein besonders großer Vorteil der Mühlenpneumatik liegt in den verhältnismäßig günstigen Anlagekosten, ferner in der einfachen Wählbarkeit des Weges über Rohrweichen, Drehrohrverteiler u. a., wobei zusätzlich Vorzüge auch gegenüber anderen Fördersystemen wie Bandtransport, Becherelevatoren usw. trotz des verhältnismäßig großen Kraftbedarfes vorliegen.

Die meist verwendeten Mühlenpneumatiken werden als Ventilatorpneumatiken gebaut, wobei insbesondere Radialventilatoren, nur selten Axial- oder Sondergebläse, eingesetzt werden. Bei großen Förderleitungen und großen Distanzen werden auch Kreiskolbengebläse und vereinzelt Schraubverdichter verwendet.

In der CH-A-290 764 wird vorgeschlagen, wenigstens zwei pneumatische Förderleitungen zu verwenden, die über je einen Reinigungsapparat an eine gemeinsame Sammelleitung angeschlossen sind und die je einem Regelapparat zugeordnet werden sollen, der jeweils seinerseits eine Luftmengen-Einstellklappe steuert. Dabei soll der Regelapparat zwischen dem Reinigungsapparat und der Sammelleitung und die Luftmengeneinstellklappe vor dem Reinigungsapparat eingebaut sein. Der Regelapparat soll hierbei die Durchflußschwankungen feststellen und über die Luftmengeneinstellklappe den Öffnungsquerschnitt der Transportleitung verändern, um dadurch ein Gleichgewicht der Luftmenge in den verschiedenen Transportleitungen automatisch sicherzustellen. Im Bereich der Mühlenpneumatik hat sich allerdings gezeigt, daß diese vorbeschriebene Lösung nicht realisierbar war, da die eingesetzten Förderleitungsquerschnitte möglichst keine Hindernisse aufweisen dürfen, Umlenkungen sanft erfolgen und Rohrweichungen keine scharfen Ablenkungen erzwingen sollen. Beim Einsatz von Fliehkraftabscheidern, die in der Mühlenpneumatik sehr häufig verwendet werden, darf auch das Luft-Produktgemisch vor Eintritt in den Abscheider nicht verwirbelt werden, da sonst die Produktabscheidung beeinträchtigt wird. Überdies bedingt das aus der CH-A-290 764 vorbekannte Luftmengen-Regelgerät einen erheblichen baulichen Aufwand, was insbesondere für seine meßtechnische Seite gilt, wenn eine genügende Regelgenauigkeit und Funktionssicherheit vorausgesetzt wird.

Eine in jeder Beziehung befriedigende Lösung für eine Mühlenpneumatik in einer pneumatischen Förderleitung für Mühlen konnte bislang leider nicht gefunden werden. Auch Lösungen, wie sie z. B. in der DE-A-1 556 111 beschrieben sind, konnten keinen nennenswerten Eingang in die Praxis finden.

Aus der DE-C-811 578 ist eine Mühlenpneumatik mit einer Förderleitung und einer Regeleinrichtung bekannt, bei der ein als Zyklon ausgebildeter Abscheider sowie eine diesem zugeordnete Druckdifferenz-Meßeinrichtung eingesetzt sind, wobei eine erste Druckmeßstelle an der Förderleitung vor deren Eintritt in den Zyklon und eine zweite Druckmeßstelle hinter dem Abscheider angeordnet sind. Von der Druckdifferenz-Meßeinrichtung aus ist eine in der Abluftleitung des Zyklons angeordnete Luftdrossel steuerbar. Zur Erzeugung des Unterdrucks in der Leitung wird ein Kreiskolbengebläse eingesetzt. Während sich der DE-C-811 578 nähere Angaben über ein Verfahren zur Regelung der Förderbedingungen in einer solchen pneumatischen Förderleitung entnehmen lassen, finden sich jedoch kaum Hinweise auf die bauliche Ausgestaltung einer hierfür geeigneten Mühlenpneumatik selbst.

Ausgehend hiervon liegt der Erfindung die Aufgabe zugrunde, eine Mühlenpneumatik der eingangs genannten Art so auszugestalten, daß sie bei guter Wirtschaftlichkeit, hoher Betriebssicherheit und relativ geringem baulichem Aufwand platzgünstig baut und auch bei flacher Druck-Volumen-Charakteristik des Luftfördersystems (Ventilatoren im Absaugsystem als Luftförderer) zufriedenstellend einsetzbar ist.

Erfindungsgemäß wird diese Aufgabe bei einer Mühlenpneumatik der eingangs genannten Art durch die Merkmale des Kennzeichens des Patentanspruchs 1 gelöst.

Durch Einsatz der erfindungsgemäßen Mühlenpneumatik lassen sich in besonders vorteilhafter Weise die Förderbedingungen in einer pneumatischen Förderleitung einer Mühle regeln. Im Hinblick auf die Aufwendigkeit vorbekannter Luftmengen-Meßvorrichtungen, die turbulenzfreie Rohrstrecken vor und nach der Meßvorrichtung sowie staubfreie Luft voraussetzen, ist bei der erfindungsgemäßen Mühlenpneumatik ein nur relativ geringer baulicher Aufwand gegeben. Ebenfalls sind die bei vielen vorbekannten Meßvorrichtungen bedingten komplizierten Umformmechaniken und Umformungen teils mechanischer, elektrischer oder pneumatischer Signale völlig vermieden. Im Hinblick auf die Vermeidung von bei staubhaltiger Luft auftretender Explosionsgefahr ist die erfindungsgemäße Mühlenpneumatik besonders günstig.

Ein besonders stabiler Regeleffekt läßt sich erzielen, wenn die Luftdrossel in geradliniger Fortsetzung zum Luftaustritt des Zyklons angeordnet ist und mehrere einstellbare und symmetrisch angeordnete Luftdurchtrittsöffnungen aufweist. Dies gilt ganz besonders, wenn die Luftdurchtrittsöffnungen in Verstellrichtung der Luftdrossel gesehen einen sich erweiternden oder einen sich verengenden, vorzugsweise einen — in Verstellrichtung der Luftdrossel gesehen — trapez- oder dreieckförmigen Querschnitt aufweisen: durch Benutzen verschiedener Teile des Trapez- bzw. Dreieckbereiches läßt sich die Anzahl der Typen reduzieren, sich eine Mehrzahl von Typen teils sogar vermeiden, da der verwendete Öffnungsbereich dem spezifischen Luftdurchsatz anpaßbar ist.

Als besonders vorteilhaft im Hinblick auf die Platzverhältnisse hat es sich gezeigt, wenn die Abluftleitung des Zyklons senkrecht in die untere Kammer mündet und die obere Kammer über eine horizontale Verbindungsleitung an die Luftsammelleitung angeschlossen ist, wobei die Verbindungsleitung in einer Horizontalebene beliebig angeschlossen werden kann.

Es ist ferner sehr vorteilhaft, in der Abluftleitung des Zyklons Längsleisten zur teilweisen oder ganzen Unterdrückung von Wirbeln anzuordnen und den Lufterzeuger für die Pneumatik im Zyklon nachzuschalten. Weiterhin vorteilhaft ist es, wenn ein um ein Gelenk bewegbarer Regelarm vorgesehen ist, der durch die Membrane verdrehbar und durch eine Einstellfeder gegen einen Schaltkontakt des Regelventils vorgespannt ist.

Die Erfindung wird nachfolgend anhand der Zeichnung im Prinzip beispielshalber noch näher erläutert. Es zeigt

Fig. 1 ein Ausführungsbeispiel für eine erfindungsgemäße Mühlenpneumatik (im Prinzip),

Fig. 1a und Fig. 1b zwei Ausführungsformen für die verwendete Luftdrossel,

Fig. 2 die gleichzeitige Verwendung einer Mehrzahl einzelner Regeleinheiten, die an eine gemeinsame Luftquelle angeschlossen sind, und

Fig. 3 eine schematische Gesamtdarstellung einer erfindungsgemäßen Mühlenpneumatik.

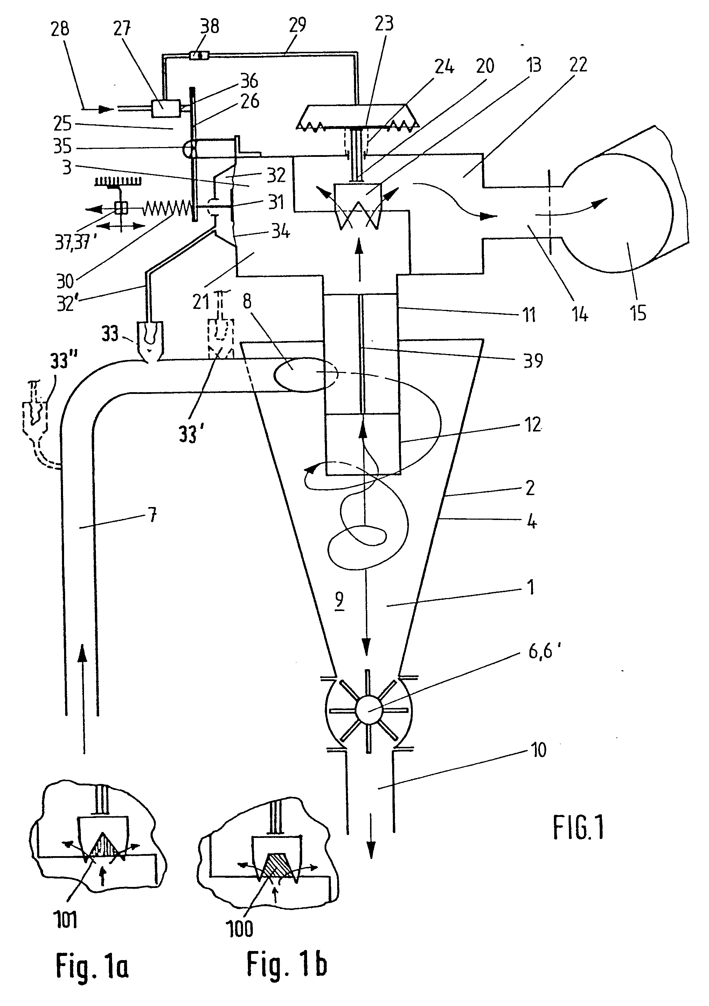

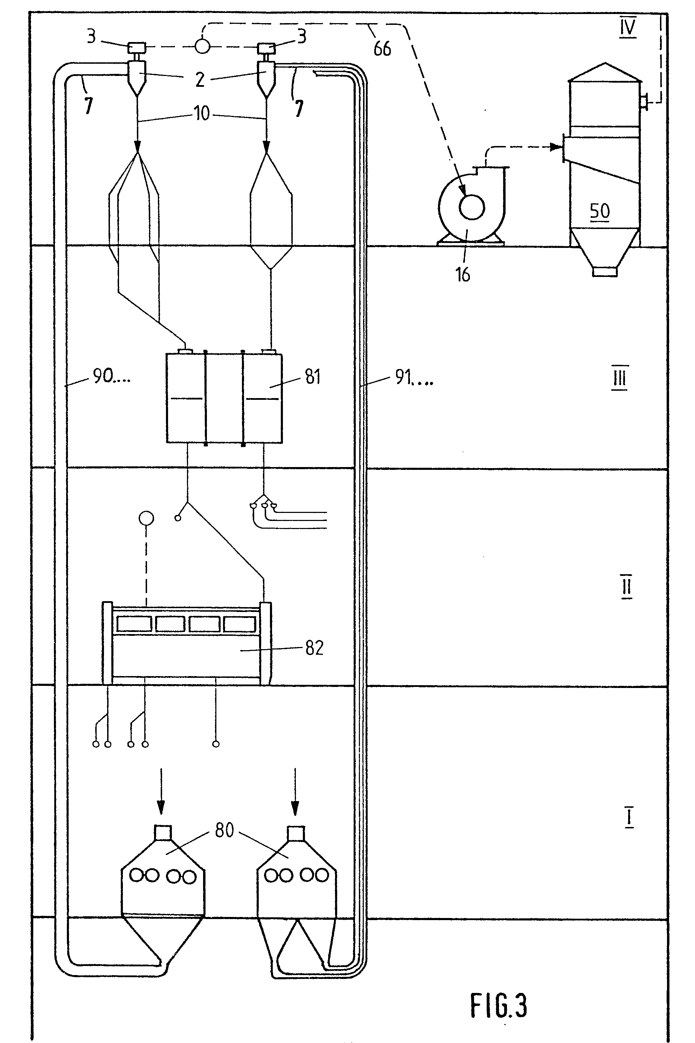

Bei der in Fig. 1 dargestellten Mühlenpneumatik ist einem Abscheider 1, der als Zyklon 2 ausgebildet ist, eine Regeleinrichtung 3 zugeordnet. Der Zyklon 2 weist einen von oben bis unten gleichmäßig sich verjüngenden Konus 4 auf, der oben mit einem Deckel 5 und unten mit einer Produktschleuse 6 bzw. einem Schleusen-Rotor 6' nach außen geschlossen ist. Das Ende einer pneumatischen Förderleitung 7 mündet im wesentlichen horizontal sowie tangential an einer Öffnung 8 in den Abscheiderraum 9. Das im Zyklon 2 ausgeschiedene Produkt fällt in die Produktschleuse 6 und wird über ein Fallrohr 10 in den Verarbeitungsprozeß zurückgegeben, wie dies aus Fig. 3 zu entnehmen ist.

Eine Abluftleitung 11 führt mit einem Tauchrohr 12 in den Abscheiderraum 9 und ist über eine Luftdrossel 13 mit einer Verbindungsleitung 14 an eine Sammelleitung 15 und an einen (in Fig. 3 dargestellten) Ventilator 16 angeschlossen.

Die Luftdrossel 13 ist aus einem Drosselschieber 20 sowie einer Drosselkammer, bestehend aus einer unteren Kammer 21 und einer oberen Kammer 22, gebildet. Der Drosselschieber 20 wird durch eine druckbeaufschlagte Kraftmembran 23 bewegt, wobei eine Druckfeder 24 den Drosselschieber 20 bei fehlender Druckluft auf der Steuerseite in eine ganz offene Stellung drückt. Die Kraftmembrane 23 wird über eine einfache Druckluftsteuereinheit 25 gesteuert, die aus folgenden Elementen besteht: einem Regelarm 26, einem Dreiweg- bzw. Regelventil 27, einer Druckluftzufuhrleitung 28, einer Steuerleitung 29, einer Einstellfeder 30 sowie einer Druckvergleichs-Meßstelle 31. Die Druckvergleichs-Meßstelle 31 weist einen geschlossenen Steuerraum 32 auf, der über eine Luftleitung 32' mit einer Druckmeßstelle 33 in der Förderleitung 7 verbunden ist (bzw. die Luftleitung 32' überträgt den statischen Druck im Ende der Förderleitung 7). Die andere Seite der Druckvergleichs-Meßstelle 31 liegt über eine geschlossene Membrane 34 direkt an der unteren Kammer 21 an. Die Druckvergleichs-Meßstelle vergleicht somit den statischen Druck der Stelle hinter dem Zyklonabscheider mit dem an einer Stelle 0,5 bis 1,5 m vor dem Zyklon (d. h. gegen die Förderrichtung versetzt). Die Druckdifferenz auf beiden Seiten der geschlossenen Membrane 34 bewegt den Regelarm 26 um ein Gelenk 35.

Die Funktionsweise der gezeigten Einrichtung ist wie folgt:

Bei abgeschalteter Förderluft wirkt an der Druckvergleichs-Meßstelle 31 auf beiden Seiten der gleiche statische Druck, so daß auf den Regelarm 26 keine weitere Kraft ausgeübt wird außer die der Einstellfeder 30, die den Regelarm 26 im Uhrzeigersinn zieht und einen Schaltkontakt 36 des Regelventils 27 über den Regelarm 26 freigibt. Bei geöffnetem Regelventil 27 wird der Verbindungsweg von der Druckluftzufuhrleitung 28 zur Steuerleitung 29 unterbrochen, so daß in der Steuerleitung 29 bzw. hinter der Kraftmembrane 23 kein Steuerdruck herrscht und die Druckfeder 24 den Drosselschieber 20 in seiner ganz offenen Stellung hält.

Bei eingeschalteter Förderluft, jedoch ohne Produktförderung und ohne automatische Luftregulierung, stellt sich in der Förderleitung 7 ein Leerlaufwiderstand bei einem Maximum der Luftgeschwindigkeit ein. Entsprechend der Luftmenge tritt auch im Zyklon 2 ein maximaler Druckverlust auf. Bei einer Mühlenpneumatik mit mehreren Förderleitungen wird deshalb der hier betrachtete Förderstrang durch die Verdoppelung seiner Luftmenge eine entsprechende Reduzierung der für die übrigen Stränge zur Verfügung stehenden Luftmenge ergeben.

Bei der gezeigten Mühlenpneumatik bewirkt eine große Druckdifferenz im Zyklon, daß die Membrane 34 nach rechts gedrückt und durch den Regelarm 26 der Schaltkontakt 36 bewegt wird. Von der Druckluftzufuhrleitung 28 wird über die Steuerleitung 29 hinter der Kraftmembrane 23 ein Druck aufgebaut, der die Luftdrossel 13 nach unten in ihre Schließstellung drückt. Die Durchflußmenge der Luft durch den Zyklon 2 wird so lange verkleinert, bis Gleichgewicht unter den einzelnen Stellgliedern entsteht. Die Luftmenge wird dabei nicht auf einen größeren, sondern auf einen tieferen Gleichgewichtswert entsprechend der zugehörigen Druckdifferenz im Zyklon 2 geregelt.

Bei geringer Produktbelastung stellt sich eine Funktionsweise der Mühlenpneumatik analog dem vorstehend beschriebenen Fall mit eingeschalteter Förderluft, aber ohne Produktförderung ein. Über die Größe der Vorspannung der Einstellfeder 30 kann dabei die Regelcharakteristik der Mühlenpneumatik beeinflußt werden.

So kann bei einer Standardausführung das Luftsteuersystem derart konzipiert sein, daß bei Anfall der Steuerluft alle Schieberstellungen offen sind, so daß auch bei einer entsprechenden Störung, etwa bei vorübergehendem Ausfall eines Kompressors, von dem der Luftbedarf von beispielsweise 0,2 – 1 atü, vorzugsweise aber von 0,5 atü als Steuerluft bezogen wird, die Mühle weiterarbeiten kann.

Durch den Einbau einer Drossel 38 (Fig. 1) kann die Bewegung der Luftdrossel 13, insbesondere die Öffnungsbewegung, sehr rasch erfolgen, was sehr wichtig ist. Dabei muß dafür gesorgt werden, daß die Steuerleitung 29 schnell entlüftet, aber langsam belüftet wird. Um nicht die Regelstabilität zu gefährden, sollten aber beide Bewegungen nicht schneller als nötig, d. h. besonders die Schließbewegung der Luftdrossel relativ langsam erfolgen.

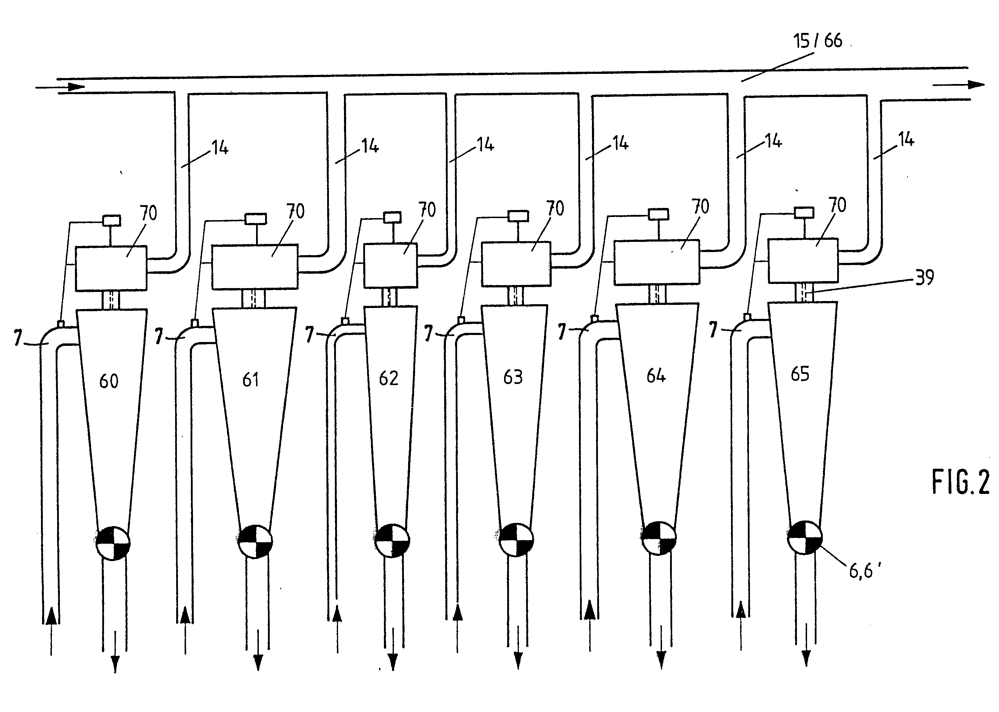

Die Darstellung nach Fig. 2 zeigt schematisch eine größere Anzahl einzelner Zyklonen 60 bis 65, die an eine gemeinsame Sammelleitung 66 angeschlossen sind. Jeder Zyklon weist eine Regeleinrichtung 70 auf, wobei alle gezeigten Regeleinrichtungen 70 bevorzugt identisch ausgeführt sind. Im Gegensatz zu den Regeleinrichtungen ist jedoch jeder Zyklon entsprechend der spezifischen Produktförderleistung in seiner Größe angepaßt.

Obwohl ohne weiteres gewisse Regelelemente für die ganze Gruppe in einem zentralen Regler zusammengefaßt werden können, hat es sich als beste Lösung ergeben, wenn jeder Regler für sich autonom funktionsfähig ist: jeder Regler wird hierfür als eine vollständige Einheit ausgebildet, wobei sich keine gegenseitige Störung oder sonstige negative Einflüsse durch die Einzelregelung feststellen lassen.

Wie in Fig. 1 und Fig. 2 dargestellt, werden in der Abluftleitung jedes Zyklons 2 bevorzugt Längsleisten in Form eines Kreuzes 39 eingebaut. Der Abscheiderwirkungsgrad des Zyklons 2 wird dadurch nicht negativ beeinflußt, jedoch der Wirbeleffekt im Zyklon 2 unter Kontrolle gehalten.

In Fig. 3 ist eine schematische Gesamtansicht einer Mühlenanlage entsprechend üblicher Form dargestellt: Das Mühlengebäude weist mehrere Stockwerke auf, die mit I, II, III und IV bezeichnet sind. Dabei sind der Boden für die Walzenstühle 80, der für die Griesputzmaschine 82, sowie der für die Plansichter 81 übereinander angeordnet, wobei das Schüttgut unter der Schwerkraft von oben nach unten fließt. Die Überhebung des Produktes für die nächste Arbeitsstufe geschieht durch die Mühlenpneumatik bzw. die einzelnen Stränge 90, 91, . . ., wobei regelmäßig mehr als zwanzig Stränge, vielfach fünfzig und mehr Stränge, benötigt werden. Diese Stränge können dabei an eine oder mehrere zentrale Reinigungseinheiten bzw. Filter 50 angeschlossen werden. Bevorzugt werden aber, mit Ausnahme der Druckstränge, alle Stränge über Zyklone an das jeweilige zentrale Luftsystem angeschlossen, wobei diese Stränge jeweils je eine eigene Regeleinrichtung aufweisen sollen. Daraus ist aber auch ersichtlich, daß nicht erzwungenermaßen alle Pneumatikleitungen mit einer eigenen Regeleinrichtung ausgerichtet werden müßten: es ist aber zweckmäßig, alle Leitungen, die an eine gemeinsame Sammelleitung angeschlossen sind, zu regeln.

**Patentansprüche**

1. Mühlenpneumatik mit einer Förderleitung (7), einer Regeleinrichtung (3), einem als Zyklon ausgebildeten Abscheider (1) sowie einer diesem zugeordneten Druckdifferenz-Meßeinrichtung (25), von der aus eine in der Abluftleitung des Zyklons (2) angeordnete Luftdrossel (13) steuerbar ist, und mit einer ersten Druckmeßstelle (33) an der Förderleitung (7) vor deren Eintritt in den Zyklon (2) und einer zweiten Druckmeßstelle (31) hinter dem Abscheider (1), dadurch gekennzeichnet, daß

a) die Abluftleitung (11) des Zyklons (2) als in dessen Abscheiderraum (9) hineinragendes Tauchrohr vorgesehen und auf dieses die Luftdrossel (13) aufgesetzt ist,

b) die Luftdrossel (13) als Kasten mit zwei teilweise übereinanderliegenden Kammern (21, 22) ausgebildet ist, wobei die untere Kammer (21) direkt an den Luftaustritt des Zyklons (2) und die obere Kammer (22) an eine Luftsammelleitung (15) angeschlossen ist sowie beide Kammern (21, 22) über einen Drosselschieber (20) oder eine Drosselklappe miteinander verbunden sind,

c) zur Betätigung des Drosselschiebers (20) bzw. der Drosselklappe eine mit der Druckdifferenz-Meßeinrichtung (25) über eine Steuerleitung (29) mit einer Drossel (38) verbundene pneumatisch betätigte Kraftmembrane (23) vorgesehen ist, und

d) die Druckdifferenz-Meßeinrichtung (25) einen Steuerraum (32), der über eine geschlossene Membrane (34) mit der unteren Kammer (21) und über eine Luftleitung (32')
direkt mit der ersten Druckmeßstelle (33)
verbunden ist, sowie ein von der Membran
(34) betätigbares Regelventil (27) aufweist,
das eine Druckluftleitung (28) mit der
Steuerleitung (29) verbindet.

2. Mühlenpneumatik nach Anspruch 1, dadurch gekennzeichnet, daß die Luftdrossel (13)
in geradliniger Fortsetzung zum Luftaustritt des
Zyklons (2) angeordnet ist und mehrere einstellbare und symmetrisch angeordnete Luftdurchtrittsöffnungen aufweist.

3. Mühlenpneumatik nach Anspruch 2, dadurch gekennzeichnet, daß die Luftdurchtrittsöffnungen in Verstellrichtung der Luftdrossel (13)
gesehen einen sich erweiternden oder einen sich
verengenden Querschnitt aufweisen.

4. Mühlenpneumatik nach Anspruch 3, dadurch gekennzeichnet, daß die Luftdurchtrittsöffnungen, in Verstellrichtung der Luftdrossel (13)
gesehen, einen trapez- (100) oder dreieckförmigen (101) Querschnitt aufweisen.

5. Mühlenpneumatik nach einem der Ansprüche 1 bis 4, dadurch gekennzeichnet, daß die
Abluftleitung des Zyklons (2) senkrecht in die
untere Kammer (21) mündet und die obere
Kammer (22) über eine horizontale Verbindungsleitung (14) an die Luftsammelleitung (15)
angeschlossen ist.

6. Mühlenpneumatik nach einem der Ansprüche 1 bis 5, dadurch gekennzeichnet, daß in der
Abluftleitung (11) des Zyklons (2) Längsleisten
(39) zur teilweisen oder ganzen Unterdrückung
von Wirbeln angeordnet sind und der Lufterzeuger (16) für die Pneumatik dem Zyklon (2)
nachgeschaltet ist.

7. Mühlenpneumatik nach einem der Ansprüche 1 bis 6, dadurch gekennzeichnet, daß ein um
ein Gelenk (35) bewegbarer Regelarm (26)
vorgesehen ist, der durch die Membrane (34)
verdrehbar und durch eine Einstellfeder (30)
gegen einen Schaltkontakt (36) des Regelventils
(27) vorgespannt ist.

## Claims

1. Mill pneumatics with a conveyor line (7), a
regulating device (3), a separator (1) constructed
as a cyclone, as well as a pressure difference
measuring device (25) associated with the latter,
from which it is possible to control an air throttle
valve (13) arranged in the exit air duct of cyclone
(2), and with a first pressure measuring point (33)
on conveyor line (7) located in front of the
entrance into cyclone (2) and a second pressure
measuring point (31) behind separator (1),
characterized in that

a) the exit air duct (11) of cyclone (2) is then in
the form of an immersion tube projecting
into its separator chamber (9) and air throttle
valve (13) is mounted on said immersion
tube,

b) the air throttle valve (13) is constructed as a
box with two partly superimposed chambers
(21, 22), the lower chamber (21) being
directly connected to the air outlet of
cyclone (2) and the upper chamber (22) to
the air collecting line (15), whilst the two
chambers (21, 22) are interconnected by
means of a throttle valve slide (20) or a
throttle valve flap,

c) a pneumatically operated force membrane
(23) connected with the pressure difference
measuring device (25) via a control line (29)
with a throttle (38) is provided for operating
the throttle valve slide (20) or the throttle
valve flap, and

d) the pressure difference measuring device
(25) has a control chamber (32) which, by
means of a sealed membrane (34) is
connected to the lower chamber (21) and via
an air duct (32') directly to the first pressure
measuring point (33), as well as a regulating
valve (27) operable by the membrane (34)
and which connects a compressed air duct
(28) to control line (29).

2. Mill pneumatics according to claim 1,
characterized in that the air throttle valve (13) is
arranged in a linear extension to the air outlet of
cyclone (2) and has a plurality of adjustable and
symmetrically arranged air openings.

3. Mill pneumatics according to claim 2,
characterized in that the air openings have a
widening or a narrowing cross-section, viewed in
the adjustment direction of the air throttle valve
(13).

4. Mill pneumatics according to claim 3,
characterized in that the air openings have a
trapezoidal (100) or triangular (101) cross-section, viewed in the adjustment direction of the air
throttle valve (13).

5. Mill pneumatics according to one of the
claims 1 to 4, characterized in that the exit air
duct of cyclone (2) issues perpendicularly into
the lower chamber (21) and the upper chamber
(22) is connected by means of a horizontal
connecting line (14) to the air collecting line (15).

6. Mill pneumatics according to one of the
claims 1 to 5, characterized in that the exit air
duct (11) of cyclone (2) contains longitudinal ribs
(39) for the partial or complete suppression of
turbulence and the air producer (16) for the
pneumatics is connected downstream of cyclone
(2).

7. Mill pneumatics according to one of the
claims 1 to 6, characterized in that a regulating
arm (26), movable about a joint (35) is provided,
which is rotatable by membrane (34) and is
pretensioned by an adjusting spring (30) against
a switch contact (36) of regulating valve (27).

## Revendications

1. Système pneumatique de meunerie comportant une conduite de transport (7), un

**0 036 219**

dispositif de réglage (3), un séparateur (1) réalisé en séparateur à cyclone, ainsi qu'un dispositif (25) de mesure différentielle de la pression affecté à ce dernier, par lequel est commandée une vanne d'étranglement d'air réglable (13) disposée dans la conduite d'air d'évacuation du cyclone (2) et comportant également un premier emplacement de mesure (33) sur la conduite de transport (7) avant son entrée dans le cyclone (2), et un second emplacement de mesure (31) situé derrière le séparateur (1), caractérisé en ce que

a) la conduite d'air d'évacuation (11) du cyclone (2) est constituée par un tube plongeur pénétrant dans sa chambre de séparation (9), et sur lequel est montée la vanne d'étranglement d'air réglable (13),

b) la vanne d'étranglement d'air réglable (13) est constituée comme un boîtier comportant deux chambres partiellement superposées (21, 22), la chambre inférieure (21) étant reliéc directement à la sortie d'air du cyclone (2) et la chambre supérieure (22) à une conduite collectrice d'air (15), les deux chambres (21, 22) étant reliées entre elles par un tiroir d'étranglement (20) ou un clapet d'étranglement,

c) pour l'actionnement du tiroir d'étranglement (20), ou du clapet d'étranglement, il est prévu une membrane de force (23) à actionnement pneumatique reliée au dispositif de mesure (25) de pression différentielle par une conduite de commande (29) comportant un étranglement (38), et

d) le dispositif de mesure (25) de pression différentielle présente une chambre de commande (32) qui est reliée par l'intermédiaire d'une membrane fermée (34) à la chambre inférieure (21) et directement au premier emplacement de mesure (33) par une conduite pneumatique (32'), ainsi qu'une soupape de réglage (27) commandée par la membrane (34), qui relie une conduite d'air sous pression (28) avec la conduite de commande (29).

2. Système pneumatique de meunerie selon la revendication 1, caractérisé en ce que la vanne d'étranglement d'air réglable (13) est disposée en alignement direct avec la sortie d'air du cyclone (2) et présente plusieurs ouvertures de passage de l'air, réglables et disposées symétriquement.

3. Système pneumatique de meunerie selon la revendication 2, caractérisé en ce que les ouvertures de passage de l'air présentent, dans le sens du réglage de la vanne d'étranglement d'air réglable (13), une section allant en s'élargissant ou en se rétrecissant.

4. Système pneumatique de meunerie selon la revendication 3, caractérisé en ce que les ouvertures de passage de l'air présentent, dans le sens de réglage de la vanne d'étranglement d'air réglable (13), une section trapézoïdale (100) ou triangulaire (101).

5. Système pneumatique de meunerie selon l'une des revendications 1 à 4, caractérisé en ce que la conduite d'évacuation d'air du cyclone (2) débouche perpendiculairement dans la chambre inférieure (21) et que la chambre supérieure (22) est reliée à la conduite collectrice d'air (15) par une conduite de liaison horizontale (14).

6. Système pneumatique de meunerie selon l'une des revendications 1 à 5, caractérisé en ce que des nervures londitudinales (39) sont disposées dans la conduite d'évacuation (11) du cyclone (2) pour réduire ou éliminer totalement les tourbillons, et en ce que la soufflante (16) du système pneumatique est montée à l'aval du cyclone (2).

7. Système pneumatique de meunerie selon l'une des revendications 1 à 6, caractérisé en ce qu'il est prévu un bras de réglage (26) mobile autour d'une articulation (35), qui peut être pivoté sous l'action de la membrane (34), et est pressé contre un contact de commutation (36) de la soupape de réglage (27) par la précontrainte d'un ressort de réglage (30).

FIG.1

Fig. 1a

Fig. 1b

FIG.2

0036219

9

FIG.3